# EUROPEAN PATENT SPECIFICATION

(11) **EP 4 363 316 B1**
(45) Date of publication and mention of the grant of the patent: **27.08.2025**
(21) Application number: 22833817.4
(22) Date of filing: 22.06.2022
(51) Int. Cl.: B64C 13/04

(54) **A SUPPORT SYSTEM**
STÜTZSYSTEM
SYSTÈME DE SUPPORT

(30) Priority: 30.06.2021 TR 202110702
(43) Date of publication of application: 08.05.2024
(73) Proprietor: Tusas- Turk Havacilik Ve Uzay Sanayii Anonim Sirketi, 06980 Ankara (TR)
(72) Inventor: ZEYBEK, Emirhan, 06980 Kahramankazan/Ankara (TR); OZEL, Mehmet Cihat, 06980 Kahramankazan/Ankara (TR)
(74) Representative: Berkkam, Ayfer
(86) International application number: PCT/TR2022/050628
(87) International publication number: WO 2023/277849

(56) References cited:
- EP-A1- 0 454 987
- EP-A1- 0 454 987
- CN-U- 208 021 276
- US-A1- 2011 084 527
- US-A1- 2011 084 527
- US-A1- 2019 351 799
- US-A1- 2019 351 799

## Description

The present invention relates to armrest systems for pilots in air and/or space vehicles.

A controller is used to provide the necessary directions to air and/or space vehicles for maneuvering and/or to control the equipment on the vehicle. In vehicles such as air and/or space vehicles and/or construction equipment, a user places his/her forearm in a structure called an armrest so that the user can control the vehicle in an accurate and comfortable way. In the known case, the armrest systems have a mechanism that can move in one or both directions, thereby enabling the height adjustment. The system should adapt to the body sizes of different users and be adaptable to different seat adjustment ranges. In order to allow the user to move her arm comfortably while driving and to prevent health problems arising from long-term use, the adjustment mechanisms of armrest systems are required be adjusted in wider ranges.

Korean patent document US20190351799, which is included in the known-state of the art, discloses that an armrest unit is adjusted inwards and outwards laterally according to the body size of the operator, and is lockable in a desired position. It is also stated that angle of the armrest cushion can be changed so as to make the pilot arm comfortable.

The other document CN208021276U, which is included in the known-state of the art, relates to armrest device of car steering position; belong to automobile component skill Art field. The armrest is an arc ancon, arc ancon lower part is connected with connecting rod, connecting rod is fixedly connected on the adjustable bulb side steering of damping, it includes bulb to damp adjustable bulb side steering, bulb is mounted in damping adjusting set, damping adjusting set inner cavity top is Part-spherical, the lower part of bulb is provided with ball cup in damping adjusting set, bulb seating face offers the spherical groove being adapted with bulb lower shape, ball cup lower part is provided with spring, damping adjusting set is screwed in by screw thread on pedestal, pedestal lower part is provided with screw rod, screw rod is screwed in the screw hole on supporting rod, support rod rear end is connected on flute profile clamping device.

A support system according to the present invention provides a more precise and reliable control of the air vehicle and the equipment on the vehicle.

Another object of the present invention is to perform a position adjustment process of the pilot armrest systems by a more practical and efficient mechanism.

A further object of the present invention is to realize a support system that performs equipment control by the operator in a safer and faster way on construction equipment.

The support system realized to achieve the object of the present invention, which is defined in the first claim and the other claims dependent thereon, comprises an air and/or space vehicle, which is an aircraft or a helicopter and/or a vehicle, which is a construction equipment; a control that is controlled by a user, who is a pilot or an operator, to enable the vehicle to be steered or to transmit a control command to the electronic or mechanical equipment on the vehicle in connection with the vehicle; and a rest on which the user can rest her/his forearm to get support while using the control, wherein the rest prevents the arm to get tired and provides precise control. Position of the rest can be adjusted by the user, before and/or during operation of the air vehicle, so as to be locked in a desired position. Therefore, the user is provided with ease of use by making the rest suitable for changing user measurements . With the movement of the actuator, position of the rest can be changed linearly up-down, right-left and front-back, and it is enabled to move away from and approach the control in different axes.

The support system of the invention comprises a rolling element located between the actuator and the rest, in connection with both, thus providing movement transfer between the actuator and the rest; an actuator with a cavity on which the rolling element can be accommodated. A ball joint provides rotation of the rolling element when it is placed in the cavity on the actuator. Movement of the rolling element in the cavity provides the movement of the rest, which is connected to the rolling element to face the actuator, conjugately with the arm movements of the user whose arm is in contact with the rest while using the control. The rest changes its position simultaneously and almost in the same direction with the rotational movements of the arm of the user, so that it provides support for all arm movements of the user without interrupting the rest contact with the arm.

In an embodiment of the invention, the support system is placed in the cavity on the actuator of the rolling element such that the rest and the cavity are aligned. A hole form-fitting with the ball joint is provided in the rolling element so that the ball joint can be accommodated, and therefore, the ball joint is mounted on the rolling element by means of radial swaging method or by means of a ring so as to limit the movement of the ball joint on the movement direction of the actuator. By means of a connecting element, the ball joint is rotatably mounted between two walls of the cavity. With the movement of the ball joint, the rolling element is triggered and rotates in the slot, allowing the rest to perform rotational movement by the movements of the user's arm.

The support system comprises inclined surfaces located on the rolling element to extend towards the rest. When the rotational movement of the rest reaches an angle predetermined by the user, the inclined surface contacts with the actuator to limit the rotational movement of the rolling element. Thus, the rolling element is prevented from rotating more than a defined angle.

In an embodiment of the invention, the support system comprises a slot located on the actuator, which surrounds the actuator so as to provide the actuator with freedom to slide linearly in case another actuator is placed in the space therein. Therefore, the actuator can perform sliding movement inside the slot.

In an embodiment of the invention, the support system comprises the cavity that wraps around the rolling element so that it moves integrally with the actuator while the actuator moves within the slot. Therefore, the rolling element is prevented from disengaging from the cavity while the body is performing its normal movement. The rest, which provides support to the user by acting concurrently with all his/her movements, also provides the user to change the rest position when a force is applied thereon, with a single arm movement with a single limb.

In an embodiment of the invention, in the support system, the rest moves up and down to increase or decrease a distance from a floor to the rest, wherein the distance is a plane to which the control is connected. The user can bring the rest to a height where she/he can best grasp the control in accordance with her/his own size.

In an embodiment of the invention, the support system comprises a fixing rod placed in the slot on the actuator, on which the actuator can slide. The fixing rod is used for mounting the body on the vehicle. There are connection holes on the fixing rod that provide the connection of the vehicle and the body, and the fixing rod is mounted on the vehicle in a removable manner with the connectors passed through the holes.

In an embodiment of the invention, the support system comprises a plurality of fixing holes opened at specified positions on the actuator and/or fixing rod used to adjust the position of the rest. In order to change the position of the rest, the user should pull a latch to disconnect the locking pin from the fixing hole. Locking pins located on each actuator can be controlled individually, so that the rest is moved in all axes. When the rest is brought to the desired position, the locking pin is inserted into the fixing hole, so that the movement of the actuator in the slot is terminated, and it is fixed in the position determined by the user.

In an embodiment of the invention, the support system comprises a second actuator which allows the position of the rest to be adjusted according to the user's shoulder width by moving the rest on the body horizontally parallel to the floor to which the control is connected. By means of the second actuator, the position of the rest can be changed to move closer or further away from the pilot.

In an embodiment of the invention, the support system comprises a third actuator which moves the rest almost perpendicular to the direction along which the control lies on the floor upon a sliding movement on the fixing rod, so as to increase or decrease a distance between the rest and the directions along which the control extends. The fixing rod extends in the slot on the third actuator and performs a sliding motion.

In an embodiment of the invention, the support system comprises a first slot and a second slot located on the third actuator so as to remain at both ends of the actuator. By means of the first slot, the third actuator can perform a sliding motion on the fixing rod. The second actuator is placed in the second slot so as to perform a sliding motion. When fixed by means of the locking pin and fixing hole on either the second or third actuator, it acts as a transmission element that transmits the movement performed by the other actuator to the rest.

In an embodiment of the invention, the support system comprises a third actuator, the thickness of which increases in proportion to a bending moment value which increases as it approaches the fixation bar. Therefore, it distributes the force applied on the actuator homogeneously and provides an increase in strength.

In an embodiment of the invention, the support system comprises a body which increases force strength by placing more than one of the actuators performing the same task on the body in parallel. Thus, the force applied on a single actuator is reduced.

In an embodiment of the invention, the support system comprises the ball joint inserted into the cavity inside the rolling element using radial swaging method or a ring. Therefore, since the ball joint is fixed into the rolling element, the rest is prevented from disengaging from the rolling element during its movement.

The support system realized to achieve the object of the present invention is illustrated in the attached drawings, in which:

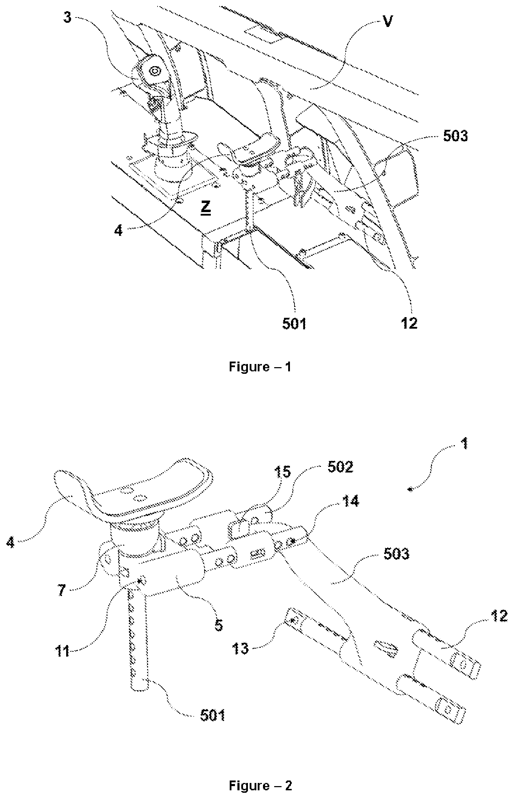

Figure 1 - is a schematic view of the vehicle and a support system.
Figure 2 - is a perspective view of a support system.

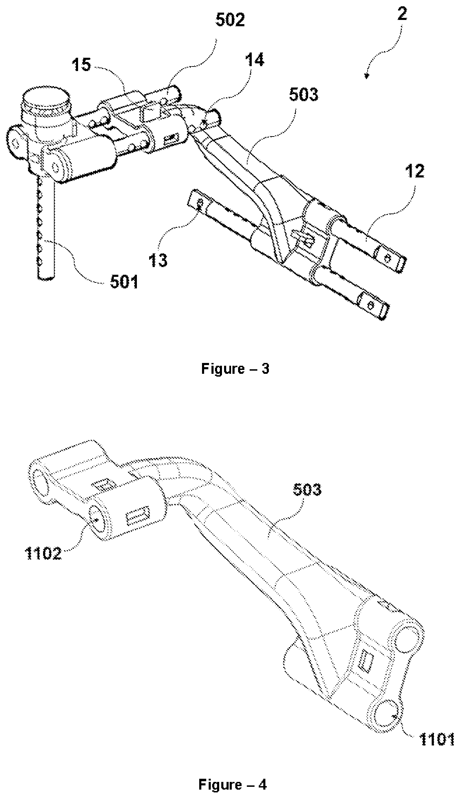

Figure 3 - is a perspective view of the body.
Figure 4 - is a perspective view of the third actuator.

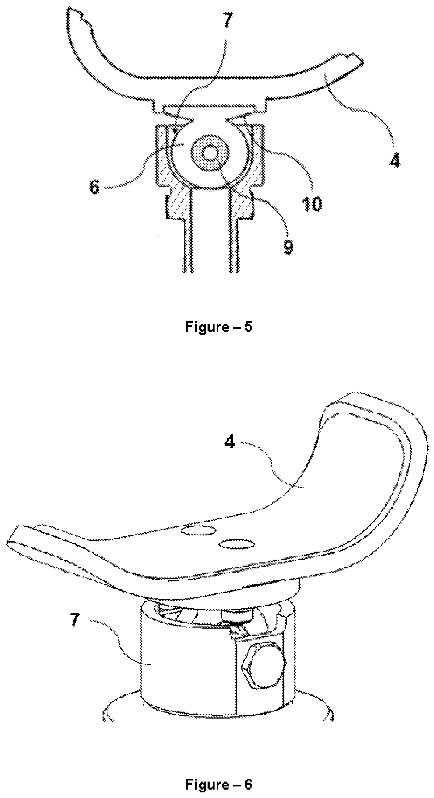

Figure 5 - is a side sectional view of the rolling element, rest and actuator.
Figure 6 - is a perspective view of the rest and cavity.

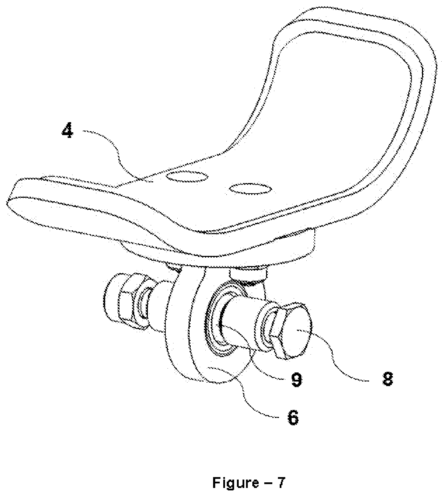

Figure 7 - is a perspective view of the rolling element, ball joint, connecting element and rest.

All the parts illustrated in figures are individually assigned a reference numeral and the corresponding terms of these numbers are listed below:
1. Support System
2. Body
3. Control
4. Rest
5. Actuator
   501. First Actuator
   502. Second Actuator
   503. Third Actuator
6. Rolling Element
7. Cavity
8. Connecting Element
9. Ball Joint
10. Inclined Surface
11. Slot
   1101. First Slot
   1102. Second Slot
12. Fixing Rod
13. Connection Hole
14. Fixing Hole
15. Locking Pin
(V) Vehicle
(Z) Floor

The support system (1) comprises a body (2) located on the vehicle (V), which provides arm support to a user; at least one control (3) which is triggered by the user to enable the vehicle (V) to maneuver and/or to control the equipment located on the vehicle (V); a rest (4) which is located on the body (2) and provides arm support to the user while using the control (3), wherein a position of the rest (4) can be adjusted by the user; at least one actuator (5) which is located on the body (2) in connection with the rest (4), and allows the position of the rest (4) to be changed (Figure-1).

The support system (1) according to the invention comprises a rolling element (6) located between the actuator (5) and the rest (4) so as to enable the rest (4) to rotate in all directions within a range of motion predetermined by the manufacturer; a cavity (7) located on the actuator (5), into which the rolling element (6) is placed to perform a rotational movement; the rest (4) which provides arm support to the user such that the movements performed by the user's arm during the use of the control (3) are simultaneous and almost in the same direction (Figure-2).

A vehicle (V) which is an air and/or space vehicle and/or a construction equipment has a control (3) controlled by the user to steer the vehicle (V) or to transmit a control command to the electronic or mechanical equipment in connection with the vehicle (V); and a rest (4), on which the user places her/his arm to get support while using the control (3), thus preventing the arm from getting tired and providing precise control. Position of the rest (4) can be adjusted by the user, before and/or during operation of the air vehicle, and locked in the desired position, thus the user is provided with ease of use by making the rest (4) suitable for the body size of the user. Upon movement of the actuator (5), position of the rest (4) can be changed linearly up-down, right-left and front-back, and the rest (4) is enabled to move away from and approach the control (3) in different axes.

The rolling element (6), which is located between the actuator (5) and the rest (4) in connection with both, thus providing movement transfer between the actuator (5) and the rest (4), has the actuator (5) having a cavity (7) thereon to receive the rolling element (6). The rotational movement of the rolling element (6) in the cavity (7) on the actuator (5) is carried out by means of the ball joint (8), which has freedom. The rest (4) is attached to the rolling element (6) so as to face the actuator (5). The movement of the rest (4) in conjunction with the arm movements that the user will make while using the control (3) is provided by the movement of the rolling element (6) in the cavity (7). The rest (4) changes its position simultaneously and almost in the same direction with the rotational movements of the user's arm, so that it provides support for all arm movements that the user will make without losing contact with the arm and the rest (4) (Figure-3).

In an embodiment of the invention, the support system (1) comprises a connecting element (8) which enables the rolling element (6) to be attached to the actuator (5) such that the rest (4) faces the cavity (7); a ball joint (9) which is fixed on the rolling element (6) so as to perform a rotational movement around the axis along which the connecting element (8) extends, thereby allowing the rolling element (6) to move within the cavity (7). A hole form-fitting with the ball joint (9) is provided in the rolling element (6) so that the ball joint (9) is mounted on the rolling element (6) such that its movement is limited. By means of the connecting element (8), the ball joint (9) is mounted between the two walls of the cavity (7). Upon the movement of the ball joint (9) around the axis that the connecting element (8) extends, the rolling element (6) is triggered to rotate in the slot (11), allowing the rest (4) to perform rotational movements with the user's arm movements (Figure-4).

The support system (1) comprises a plurality of inclined surfaces (10) located on the rolling element (6) to extend towards the rest (4), wherein the inclined surfaces (10) contact the actuator (5) to enable that the rotational movement of the rolling element (6) in the cavity (7) is limited to a predetermined angle value by the user. Thus, it is enabled that the rest (4) changes its position momentarily within the angle values determined by the manufacturer in accordance with the user's arm movements. When the rotational movement of the rest (4) in all directions reaches an angle predetermined by the manufacturer, the inclined surface (10) contacts the actuator (5) to limit the rotational movement of the rolling element (6).

In an embodiment of the invention, the support system (1) comprises a plurality of slots (11) that allow the actuator (5) removably attached therein to perform a sliding movement in the direction it extends. Therefore, position of the rest (4) is changed by the linear sliding movement of the actuator (5) in the slot (11) where it is placed (Figure-5).

In an embodiment of the invention, the support system (1) comprises a cavity (7) which surrounds the rolling element (6) so as to allow the rolling element (6) to move together with the actuator (5) during the movement of the actuator (5) within the slot (11), thereby allowing concurrent execution of the processes which include rotation of the rest (4) in conjunction with the user's arm movements and height adjustment of the rest (4) by the user. Thanks to the cavity (7) that wraps around the rolling element (6), the rolling element (6) is prevented from disengaging from the cavity (7) when the body (2) performs its normal movement, thus the user is enabled to change the position of the rest (4) (Figure-6).

In an embodiment of the invention, the support system (1) comprises a floor (Z) to which the control (3) is connected; a first actuator (501) which is triggered by the user to enable the rest (4) to be moved up-down so as to increase or decrease a distance between the floor (Z) and the rest (4). Since the rest (4) is moved up-down so as to increase or decrease the distance from the rest (4) to the floor (Z), the rest can be brought to a height that allows the user to grasp the control (3) according to her/his body dimensions.

In an embodiment of the invention, the support system (1) comprises a fixing rod (12) located in connected with the actuator (5) so as to allow the actuator (5) to perform a sliding movement thereon, thus providing the connection between the vehicle (V) and the body (2); a plurality of connection holes (13) located on the fixing rod (12) and allowing the fixing rod (12) to be mounted on the vehicle (V) in a removable way. The body (2) is enabled to be mounted on the vehicle (V) by means of the fixing rod (12) by using the connection holes (13).

In an embodiment of the invention, the support system (1) comprises a plurality of fixing holes (14) located on the actuator (5) and/or the fixing rod (12); a locking pin (15) which is placed in the fixing hole (14) when the rest (4) is brought to the desired position by the user, so that it ends the movement of the actuator (5) in the slot (11) to keep the actuator (5) in a position determined by the user. Therefore, when the rest (4) is fixed in the position desired by the user, position of the rest (4) is maintained until the locking pin (15) is removed from the fixing hole (14) before the next adjustment command by the user (Figure-7).

In an embodiment of the invention, the support system (1) comprises a second actuator (502) located on the body (2) in connection with the first actuator (501), which allows the rest (4) to be moved almost parallel to the floor (Z) and positioned depending on the shoulder width of the user. Thanks to the second actuator (502), the rest (4) can be positioned to approach and/or move away from the user in the horizontal direction.

In an embodiment of the invention, the support system (1) comprises a third actuator (503) located on the body (2), which performs a sliding motion on the fixing rod (12) to move the rest (4) almost perpendicular to the direction along which the control (3) lies on the floor (Z), such that a distance between the rest (4) and the control (3) is increased or decreased. Therefore, the rest (4) is enabled to be moved in a direction parallel to the movement direction of the vehicle (V), such that rest (4) approaches the control (3).

In an embodiment of the invention, the support system (1) comprises the third actuator (503) having a first slot (1101) at one end that allows the third actuator (503) to slide on the fixing rod (12) and a second slot (1102) at its other end that allows the third actuator (503) to perform a sliding movement, thereby providing transfer of movement between the actuators (5). On the third actuator (503), there is the first slot (1101) and the second slot (1102), which are located at both ends of the actuator (5). When fixed by means of the locking pin (15) and the fixing hole (14) on any of the actuators (5), the third actuator (503) provides transfer of the movement performed by the other actuators (501, 502) to the rest. Therefore, the first actuator (501), the second actuator (502) and the third actuator (503) move together to change the position of the rest (4).

In an embodiment of the invention, the support system (1) comprises a third actuator (503) designed to increase the wall thickness depending on the increase in the bending moment as it approaches the fixing rod (12), thus providing strength with the homogeneous distribution of the force thereon. Therefore, the body (2) is prevented from being damaged by the forces exerted thereon by the rest (4).

In an embodiment of the invention, the support system (1) comprises the ball joint (9) fixed on the rolling element (6) by radial swaging or ring method. Therefore, upon the movement of the actuator (5), it is ensured that the ball joint (9) operates integrally with the rolling element (6) without disengaging from rolling element (6).

## Claims

1. A support system (1) comprising a body (2) configured to be located on a vehicle (V), which provides arm support to a user; at least one control (3) which is triggered by the user to enable the vehicle (V) to maneuver and/or to control the equipment located on the vehicle (V); at least one rest (4) which is located on the body (2) and provides arm support to the user while using the control (3), wherein a position of the rest (4) can be adjusted by the user; at least one actuator (5) which is located on the body (2) in connection with the rest (4), and allows the position of the rest (4) to be changed; at least one rolling element (6) located between the actuator (5) and the rest (4) so as to enable the rest (4) to rotate in all directions within a range of motion predetermined by the manufacturer; a cavity (7) located on the actuator (5), into which the rolling element (6) is placed to perform a rotational movement; the rest (4) which provides arm support to the user such that the movements performed by the user's arm during the use of the control (3) are simultaneous and almost in the same direction, **characterized by** a plurality of inclined surfaces (10) located on the rolling element (6) to extend towards the rest (4), wherein the inclined surfaces (10) contact the actuator (5) to enable that the rotational movement of the rolling element (6) in the cavity (7) is limited to a predetermined angle value by the user.

2. A support system (1) according to claim 1, **characterized by** at least one connecting element (8) which enables the rolling element (6) to be attached to the actuator (5) such that the rest (4) faces the cavity (7); a ball joint (9) which is fixed on the rolling element (6) so as to perform a rotational movement around the axis along which the connecting element (8) extends, thereby allowing the rolling element (6) to move within the cavity (7).

3. A support system (1) according to any of the above claims, **characterized by** a plurality of slots (11) that allow the actuator (5) removably attached therein to perform a sliding movement in the direction it extends.

4. A support system (1) according to claim 3, **characterized by** the cavity (7) which surrounds the rolling element (6) so as to allow the rolling element (6) to move together with the actuator (5) during the movement of the actuator (5) within the slot (11), thereby allowing concurrent execution of the processes which include rotation of the rest (4) in conjunction with the user's arm movements and height adjustment of the rest (4) by the user.

5. A support system (1) according to any of the above claims, **characterized by** a floor (Z) to which the control (3) is connected; a first actuator (501) which is triggered by the user to enable the rest (4) to be moved up-down so as to increase or decrease a distance between the floor (Z) and the rest (4).

6. A support system (1) according to any of the above claims, **characterized by** at least one fixing rod (12) located in connected with the actuator (5) so as to allow the actuator (5) to perform a sliding movement thereon, thus providing the connection between the vehicle (V) and the body (2); a plurality of connection holes (13) located on the fixing rod (12) and allowing the fixing rod (12) to be mounted on the vehicle (V) in a removable way.

7. A support system (1) according to claim 6, **characterized by** a plurality of fixing holes (14) located on the actuator (5) and/or the fixing rod (12); at least one locking pin (15) which is placed in the fixing hole (14) when the rest (4) is brought to the desired position by the user, so that it ends the movement of the actuator (5) in the slot (11) to keep the actuator (5) in a position determined by the user.

8. A support system (1) according to any of the claims 6 to 7, **characterized by** a second actuator (502) located on the body (2) in connection with the first actuator (501), which allows the rest (4) to be moved almost parallel to the floor (Z) and positioned depending on the shoulder width of the user.

9. A support system (1) according to claim 8 when dependent on claim 6, **characterized by** a third actuator (503) located on the body (2), which performs a sliding motion on the fixing rod (12) to move the rest (4) almost perpendicular to the direction along which the control (3) lies on the floor (Z), such that a distance between the rest (4) and the control (3) is increased or decreased.

10. A support system (1) according to claim 9, **characterized by** the third actuator (503) having a first slot (1101) at one end that allows the third actuator (503) to slide on the fixing rod (12) and a second slot (1102) at its other end that allows the third actuator (503) to perform a sliding movement, thereby providing transfer of movement between the actuators (5).

11. A support system (1) according to claim 9 or claim 10, **characterized by** the third actuator (503) designed to increase the wall thickness depending on the increase in the bending moment as it approaches the fixing rod (12), thus providing strength with the homogeneous distribution of the force thereon.

12. A support system (1) according to any of the claims 1 to 11 **characterized by** the ball joint (9) fixed on the rolling element (6) by radial swaging or ring method.

## Patentansprüche

1. Ein Stützsystem (1) mit einem Körper (2), der so konfiguriert ist, dass er an einem Fahrzeug (V) angebracht werden kann und einem Benutzer Armstütze bietet;
mindestens einer Steuerung (3), die vom Benutzer betätigt wird, um das Fahrzeug (V) zu manövrieren und/oder die am Fahrzeug (V) befindliche Ausrüstung zu steuern; mindestens eine Stütze (4), die an dem Körper (2) angeordnet ist und dem Benutzer während der Benutzung der Steuerung (3) eine Armstütze bietet, wobei eine Position der Stütze (4) durch den Benutzer eingestellt werden kann;
mindestens einen Aktuator (5), der an dem Körper (2) in Verbindung mit der Stütze (4) angeordnet ist und eine Veränderung der Position der Stütze (4) ermöglicht; mindestens ein Wälzkörper (6), der zwischen dem Stellglied (5) und der Stütze (4) angeordnet ist, um eine Drehung der Stütze (4) in alle Richtungen innerhalb eines vom Hersteller vorgegebenen Bewegungsbereichs zu
ermöglichen; einen Hohlraum (7), der am Stellglied (5) angeordnet ist und in den der Wälzkörper (6) eingesetzt ist, um eine Drehbewegung auszuführen; die Stütze (4), die dem Benutzer eine Armstütze bietet, so dass die vom Benutzer während der Verwendung der Steuerung (3) ausgeführten Bewegungen gleichzeitig und nahezu in derselben Richtung erfolgen, **gekennzeichnet durch** mehrere geneigte Flächen (10), die an dem Rollelement (6) angeordnet sind, um sich in Richtung der
Stütze (4) zu erstrecken (4) erstrecken, wobei die geneigten Flächen (10) den Aktuator (5) berühren, um zu ermöglichen, dass die Drehbewegung des Rollelements (6) in der Aussparung (7) durch den Benutzer auf einen vorbestimmten Winkelwert begrenzt wird.

2. Ein Stützsystem (1) gemäß Anspruch 1, **gekennzeichnet durch** mindestens ein Verbindungselement (8), das es ermöglicht, das Rollelement (6) so am
Aktuator (5) zu befestigen, dass der Rest (4) dem Hohlraum (7) zugewandt ist; ein Kugelgelenk (9), das an dem Rollelement (6) befestigt ist, um eine Drehbewegung um die Achse auszuführen, entlang der sich das Verbindungselement (8) erstreckt, wodurch sich das Rollelement (6) innerhalb des Hohlraums (7) bewegen kann.

3. Ein Stützsystem (1) gemäß einem der vorstehenden Ansprüche,
**gekennzeichnet durch** eine Vielzahl von Schlitzen (11), die es dem darin lösbar befestigten Aktuator (5) ermöglichen, eine Gleitbewegung in seiner Erstreckungsrichtung auszuführen.

4. Ein Stützsystem (1) gemäß Anspruch 3, **gekennzeichnet durch** den Hohlraum (7), der das Rollelement (6) so umgibt, dass sich das Rollelement (6) zusammen mit dem Aktuator (5) während der Bewegung des Aktuators (5) innerhalb des Schlitzes (11) wodurch die gleichzeitige Ausführung der Prozesse ermöglicht wird, die die Drehung der
Auflage (4) in Verbindung mit den Armbewegungen des Benutzers und die Höhenverstellung der Auflage (4) durch den Benutzer umfassen.

5. Ein Stützsystem (1) gemäß einem der vorstehenden Ansprüche, **gekennzeichnet durch** einen Boden (Z), mit dem die Steuerung (3) verbunden
ist; einen ersten Aktuator (501), der vom Benutzer ausgelöst wird, um die Stütze (4) auf und ab zu bewegen, um einen Abstand zwischen dem Boden (Z) und der Stütze zu vergrößern oder zu verkleinern (4) zu vergrößern oder zu verkleinern.

6. Ein Stützsystem (1) gemäß einem der vorstehenden Ansprüche, **gekennzeichnet durch** mindestens eine Befestigungsstange (12), die mit dem Aktuator (5) verbunden ist, so dass der Aktuator (5) eine Gleitbewegung
darauf ausführen kann, wodurch die Verbindung zwischen dem Fahrzeug (V) und dem Körper (2) hergestellt wird; mehrere Verbindungslöcher (13), die an der Befestigungsstange (12) angeordnet sind und es ermöglichen, die Befestigungsstange (12) lösbar am Fahrzeug (V) zu befestigen.

7. Ein Stützsystem (1) gemäß Anspruch 6, **gekennzeichnet durch** eine Vielzahl von Befestigungslöchern (14), die an dem Aktuator (5) und/oder der Befestigungsstange (12) angeordnet sind; mindestens einem Sicherungsstift (15), der in die Befestigungsöffnung (14) eingesetzt wird, wenn die Auflage (4) vom Benutzer in die gewünschte Position gebracht wird, so dass er die Bewegung des Betätigungselements (5) in dem Schlitz (11) beendet, um das Betätigungselement (5) in einer vom Benutzer festgelegten Position zu halten.

8. Ein Stützsystem (1) gemäß einem der Ansprüche 6 bis 7, **gekennzeichnet durch** einen zweiten Aktuator (502), der an dem Körper (2) in Verbindung mit dem ersten Aktuator (501) angeordnet ist und es ermöglicht, die Auflage (4) nahezu parallel zum Boden (Z) zu verschieben und in Abhängigkeit von der
Schulterbreite des Benutzers zu positionieren.

9. Ein Stützsystem (1) gemäß Anspruch 8, abhängig von Anspruch 6, **gekennzeichnet durch** einen dritten Aktuator (503), der an dem Körper (2) angeordnet ist und eine Gleitbewegung an der Befestigungsstange (12) ausführt, um die Auflage (4) nahezu senkrecht zu der Richtung, in der die
Steuerung (3) auf dem Boden (Z) liegt, zu verschieben, so dass ein Abstand zwischen der Auflage (4) und der Steuerung (3) vergrößert oder verkleinert wird.

10. Ein Stützsystem (1) gemäß Anspruch 9, **gekennzeichnet durch** den dritten
Aktuator (503), der an einem Ende einen ersten Schlitz (1101) aufweist, der es dem dritten Aktuator (503) ermöglicht, auf der Befestigungsstange (12) zu gleiten, und an seinem anderen Ende einen zweiten Schlitz (1102) aufweist, der es dem dritten Aktuator (503) ermöglicht, eine Gleitbewegung auszuführen, wodurch eine Bewegungsübertragung zwischen den Aktuatoren (5) erfolgt.

11. Ein Stützsystem (1) gemäß Anspruch 9 oder Anspruch 10, **gekennzeichnet durch** den dritten Aktuator (503), der so ausgelegt ist, dass er die Wandstärke in Abhängigkeit von der Zunahme des Biegemoments bei Annäherung an die Befestigungsstange (12) erhöht und so für Festigkeit bei gleichmäßiger Kraftverteilung sorgt.

12. Ein Stützsystem (1) gemäß einem der Ansprüche 1 bis 11, **gekennzeichnet durch** das Kugelgelenk (9), das durch radiales Stauchen oder ein Ringverfahren an dem Wälzkörper (6) befestigt ist.

## Revendications

1. Système de support (1) comprenant un corps (2) configuré pour être situé sur un véhicule (V), qui fournit un support pour les bras d'un utilisateur ; au moins une
commande (3) qui est déclenchée par l'utilisateur pour permettre au véhicule (V) de manœuvrer et/ou de contrôler l'équipement situé sur le véhicule (V) ; au moins un repose-bras (4) qui est situé sur le corps (2) et fournit un appui pour les bras de l'utilisateur pendant l'utilisation de la commande (3), dans lequel une position du
epose-bras (4) peut être réglée par l'utilisateur ; au moins un actionneur (5) qui est situé sur le corps (2) en liaison avec le repose-bras (4) et permet de modifier la position du repose-bras (4) ; au moins un élément roulant (6) situé entre l'actionneur (5) et l'appui (4) de manière à permettre à l'appui (4) de tourner dans toutes les directions dans une plage de mouvement prédéterminée par le fabricant ; une cavité (7) située
sur l'actionneur (5), dans laquelle l'élément roulant (6) est placé pour effectuer un mouvement de rotation ; le repose-bras (4) qui soutient le bras de l'utilisateur de telle sorte que les mouvements effectués par le bras de l'utilisateur pendant l'utilisation de la commande (3) soient simultanés et pratiquement dans la même direction, **caractérisé par** une pluralité de surfaces inclinées (10) situées
sur l'élément roulant (6) pour s'étendre vers le repose-bras (4), dans lequel les surfaces inclinées (10) sont en contact avec l'actionneur (5) pour permettre que le mouvement de rotation de l'élément roulant (6) dans la cavité (7) soit limité à une valeur angulaire prédéterminée par l'utilisateur.

2. Système de support (1) selon la revendication 1, **caractérisé par** au moins un élément de connexion (8) qui permet à l'élément roulant (6) d'être fixé à l'actionneur (5) de telle sorte que le repos (4) soit tourné vers la cavité (7) ; une rotule (9) qui est fixée sur l'élément roulant (6) de manière à effectuer un mouvement de rotation autour de l'axe le long duquel s'étend l'élément de liaison (8), permettant ainsi à l'élément roulant (6) de se déplacer à l'intérieur de la cavité (7).

3. Système de support (1) selon l'une quelconque des revendications précédentes, **caractérisé par** une pluralité de fentes (11) qui permettent à l'actionneur (5) fixé de manière amovible dans celles-ci d'effectuer un mouvement de glissement dans la direction dans laquelle il s'étend.

4. Système de support (1) selon la revendication 3, **caractérisé par** la cavité (7) qui entoure l'élément roulant (6) de manière à permettre à l'élément roulant (6) de se déplacer conjointement avec l'actionneur (5) pendant le mouvement de l'actionneur (5) à l'intérieur de la fente (11), permettant ainsi l'exécution
l'exécution simultanée des processus qui comprennent la rotation du repose-bras (4) en conjonction avec les mouvements du bras de l'utilisateur et le réglage en hauteur du repose-bras (4) par l'utilisateur.

5. Système de support (1) selon l'une quelconque des revendications précédentes, **caractérisé par** un plancher (Z) auquel la commande (3) est reliée ; un premier actionneur (501) qui est déclenché par l'utilisateur pour permettre au repose-pieds (4) d'être déplacé vers le haut ou vers le bas afin d'augmenter ou de réduire la distance entre le plancher (Z) et le repose-pieds (4).

6. Système de support (1) selon l'une quelconque des revendications précédentes, **caractérisé par** au moins une tige de fixation (12) située en liaison avec
l'actionneur (5) de manière à permettre à l'actionneur (5) d'effectuer un mouvement de coulissement sur celle-ci, assurant ainsi la liaison entre le véhicule (V) et la carrosserie (2) ; une pluralité de trous de connexion (13) situés sur la tige de fixation (12) et permettant à la tige de fixation (12) d'être montée sur le véhicule (V) de manière amovible.

7. Système de support (1) selon la revendication 6, **caractérisé par** une pluralité de trous de fixation (14) situés sur l'actionneur (5) et/ou la tige de fixation (12) ; au moins une goupille de verrouillage (15) qui est placée dans le trou de fixation (14) lorsque le support (4) est amené dans la position souhaitée par l'utilisateur, de manière à mettre fin au mouvement de l'actionneur (5) dans la fente (11) afin de
de maintenir l'actionneur (5) dans une position déterminée par l'utilisateur.

8. Système de support (1) selon l'une quelconque des revendications 6 à 7, **caractérisé par** un deuxième actionneur (502) situé sur le corps (2) en liaison avec le premier actionneur (501), qui permet au repose-bras (4) d'être déplacé presque parallèlement au sol (Z) et positionné en fonction de la largeur des épaules de l'utilisateur.

9. Système de support (1) selon la revendication 8, dépendant de la revendication 6, **caractérisé par** un troisième actionneur (503) situé sur le corps (2), qui effectue un mouvement de glissement sur la tige de fixation (12) pour déplacer le repose-pied (4) presque perpendiculairement à la direction dans laquelle la commande (3) repose sur le sol (Z), de telle sorte qu'une distance entre le repose-pied (4) et la commande (3) est augmentée ou diminuée.

10. Système de support (1) selon la revendication 9, **caractérisé par le fait que** le troisième actionneur (503) comporte une première fente (1101) à une extrémité qui permet au troisième actionneur (503) de coulisser sur la tige de fixation (12) et une deuxième fente (1102) à son autre extrémité qui permet au troisième actionneur (503) d'effectuer un mouvement de coulissement, assurant ainsi le transfert du mouvement entre les actionneurs (5).

11. Système de support (1) selon la revendication 9 ou la revendication 10, **caractérisé par** le troisième actionneur (503) conçu pour augmenter l'épaisseur de la paroi en fonction de l'augmentation du moment de flexion à mesure qu'il s'approche de la tige de fixation (12), assurant ainsi une résistance avec une répartition homogène de la force sur celle-ci.

12. Système de support (1) selon l'une quelconque des revendications 1 à 11 **caractérisé par** le joint à rotule (9) fixé sur l'élément roulant (6) par sertissage radial ou par une méthode à bague.
